# EUROPÄISCHE PATENTANMELDUNG

(11) **EP 1 277 876 A2**
(43) Veröffentlichungstag der Anmeldung: **22.01.2003**
(21) Anmeldenummer: 02014923.3
(22) Anmeldetag: 08.07.2002
(51) Int. Cl.: D06N 3/14, C08G 18/38, D06M 15/564

(54) **Verwendung spezieller Härter in 2-Komponenten PU-Systemen zum Beschichten flexibler Substrate**

(30) Priorität: 19.07.2001 DE 10135316
(71) Anmelder: BAYER AG, 51368 Leverkusen (DE)
(72) Erfinder: Groth, Stefan Dr., 51375 Leverkusen (DE); Hassel, Tillmann, Dr., 50259 Pulheim (DE); Komorek, Roland, 51381 Leverkusen (DE); Zwiener, Christian, Dr., 50672 Köln (DE)

(57) **Zusammenfassung**

Verwendung eines 2K-PU-Beschichtungssystems aus den Komponenten A) Bindemittel und B) Härter zum Beschichten von flexiblen Substraten, insbesondere Leder oder Textil, dadurch gekennzeichnet, dass die Härterkomponente B) einen Asparaginsäureester der Formel I enthält 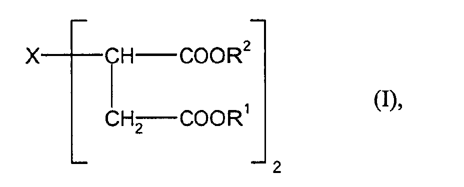 worin
R¹ und R² unabhängig voneinander gleich oder verschieden sind und für C₁-C₄-Alkyl stehen,
X für einen Rest der Formel 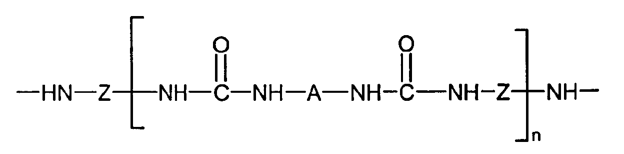 steht,
worin
- A: ein bivalenter organischer Rest bedeutet,
- Z: ein bivalenter aliphatischer Rest mit 4 bis 18 C-Atomen bedeutet und
- n: für 0 bis 1 steht.

## Beschreibung

Die Erfindung betrifft die Verwendung spezieller Härter in 2-Komponenten PU-Systemen zum Beschichten flexibler Substrate wie Leder und Textil zur Herstellung von Beschichtungen mit guter dynamischer Belastbarkeit.

Die Reaktivbeschichtung von Substraten mit Polyurethanen ist an sich bekannt. Man appliziert dabei das Bindemittel (Polyisocyanat) und einen Härter (Polyamin), die gegebenenfalls in einem geeignetem Lösemittel gelöst sind, vorzugsweise mittels einer Sprühpistole, auf das Substrat.

Gemäß dem Stand der Technik werden Isocyanatgruppen aufweisende Prepolymere (Bindemittel) und ausgewählte Polyamine (Härter), z.B. reaktionsträge aromatische oder reversibel blockierte aliphatische Polyamine intensiv vermischt, und entweder direkt auf ein zu beschichtendes Substrat oder vorzugsweise auf einen einstweiligen Träger aufgesprüht und anschließend das zu beschichtende Substrat, z. B. Leder, Papier, Vliesstoffe oder textile Bahnen zukaschiert und die beschichtete Ware in einen Trockenkanal zur Weiterreaktion der Beschichtung transportiert. Anschließend zieht man das weitgehend ausreagierte Material vom Trennträger ab. Repräsentativ für diesen Stand der Technik sind z. B. DE-A 1 570 524 (US-A 3 475 266); DE-A 2 637 115 (US-A 4 108 842) und DE-A 2 826 232. Derart beschichtete Leder haben ausgezeichnete Gebrauchseigenschaften; sie sind leicht zu pflegen und weisen insbesondere sehr gute Beständigkeit gegen Knickbeanspruchung auf.

Für dieses Verfahren ist ein genau abgestimmtes Reaktivitäts- und Eigenschaftsprofil der Ausgangsprodukte entscheidend. So muss das Reaktivsystem unter Verarbeitungsbedingungen ausreichend lange klebrig sein, um ein Zukaschieren des Substrates innerhalb einer technisch genügend langen Zeitspanne zu ermöglichen. Andererseits muss die Beschichtung so rasch trocknen, dass man das beschichtete Substrat nach einer technisch vernünftigen Zeit vom einstweiligen Trennträger abziehen kann.

Es bestand daher die technische Aufgabe, ein Polyuhrethansystem zur Reaktivbeschichtung flexibler Substrate, besonders Leder, zur Verfügung zu stellen, welches Beschichtungen mit guter Knickbeständigkeit liefert.

In der EP-A 403 921 wird ein Verfahren zur Herstellung von Überzügen beschrieben, das auf einer Polyisocyanatkomponente und Asparaginsäureestern als Härter basiert. Diese Veröffentlichung beschreibt überwiegend hochvernetzte Beschichtungen für unflexible Substrate wie Stahlblech, Kunststoff, Holz und Glas und geht auf die Anforderung nach hoher dynamischer Belastbarkeit der Beschichtungen, wie sie für flexible Substrate erforderlich ist, nicht ein.

Es wurde gefunden, dass die technische Aufgabe dadurch gelöst werden kann, dass man zum Aufbau der Polyharnstoff-Polyurethane neben NCO-Prepolymeren als Bindemittel, vorzugsweise mit einem bestimmten NCO-Gehalt und eingegrenzter Funktionalität einen Härter verwendet, der die spezielle Asparaginsäureester der allgemeinen Formel I enthält. 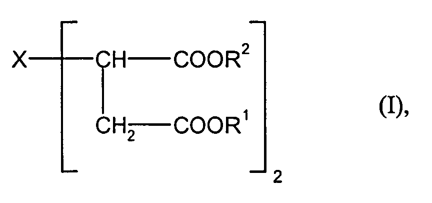 worin
- R¹ und R²: unabhängig voneinander gleich oder verschieden sind und für C₁-C₄-Alkyl stehen,
- X: für einen Rest der Formel 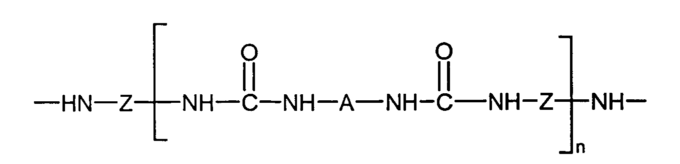
steht,
worin
- A: ein bivalenter organischer Rest bedeutet,
- Z: ein bivalenter aliphatischer Rest mit 4 bis 18 C-Atomen bedeutet und
- n: für 0 bis 1 steht.

Überraschend ist vor allem, dass die Beschichtungen mit speziellen Asparaginsäureestern der Formel I gute dynamische Belastbarkeit (Knickechtheiten) aufweisen. Dieser Befund war nicht zu erwarten; die üblicherweise eingesetzten Aminhärter weisen sämtlich primäre Aminogruppen auf und liefern mit den korrespondierenden NCO-Prepolymeren hochelastische und damit gegen Knickbelastung sehr widerstandsfähige Polyurethanpolyharnstoffe. Im Gegensatz dazu weisen die erfindungsgemäß einzusetzenden Asparaginsäureester sekundäre Aminogruppen auf; die entsprechenden Polyurethanpolyharnstoffe sind wesentlich weniger elastisch. Ein damit zusammenhängender technischer Vorteil besteht darin, dass unter erfindungsgemäßer Verwendung weichere Lederbeschichtungen resultieren. Das ist erwünscht, weil dadurch ein natürlicherer Aspekt der beschichteten Leder erreicht wird.

Es wurde weiterhin gefunden, dass beim erfindungsgemäßem Verfahren auch bei technisch normalerweise verwendeten Valverhältnissen von NCO-Bindemittel/Amin-Härter nahe 1 die reaktionskinetischen Parameter mit eingeführten Systemen entweder direkt vergleichbar sind oder durch Katalyse mit Wasser und/oder sauren Verbindungen sehr leicht einstellbar sind.

Gegenstand der Erfindung ist die Verwendung einer Härterkomponente enthaltend Asparaginsäureester der Formel I in einem 2K-PU-System zur Beschichtung von flexiblen Substraten, insbesondere Leder oder Textil, besonders bevorzugt Leder.

Die erfindungsgemäße Verwendung ist in einer bevorzugten Ausführungsform dadurch gekennzeichnet, dass das Poly-NCO-funktionelle Bindemittel A) einen NCO-Gehalt von 2 bis 8 %, einen als Zahlenmittel bestimmten Molekulargewicht von 700 bis 8 000 g/mol und eine NCO-Funktionalität von 2,0 bis 3,0 besitzt, und der Aminhärter B) einen Asparaginsäureester der allgemeinen Formel I enthält, wobei das Valverhältnis von NCO-Bindemittel A) zu Aminkomponente B) 1:1 bis 1,33:1 beträgt.

Besonders bevorzugt erfolgt die Beschichtung durch Applikation der beiden Komponenten A und B mittels einer Spritzanlage, wobei die Mischung der beiden Komponenten im Spritzkopf erfolgt.

### Bindemittel

Als Poly-NCO-funktionelle Bindemittel der Komponente A) sind vorzugsweise aromatische oder aliphatische Prepolymere basierend auf Polyethern, Polyestern oder Polycarbonaten mit einem NCO-Gehalt zwischen 2 und 8 % geeignet. Die NCO-Funktionalität liegt vorzugsweise bei 2,0 bis 3,0, insbesondere bei 2,2 bis 2,5.

Die NCO-Prepolymeren A) können durch Umsetzung von organischen Polyisocyanaten a) mit NCO-reaktiven Verbindungen b) hergestellt werden, wobei als organische Polyisocyanate a) beispielsweise aromatische oder aliphatische Polyisocyanate in Betracht kommen.

Polyisocyanate a) sind beispielsweise Verbindungen der Formel Q(NCO)ₙ mit einem mittleren Molekulargewicht unter 800, worin n eine Zahl von 2 bis 4 und Q einen aliphatischen C₄-C₁₂-Kohlenwasserstoffrest, einen cycloaliphatischen C₆-C₁₅-Kohlenwasserstoffrest oder einen aromatischen C₆-C₁₅-Kohlenwasserstoffrest bedeuten, beispielsweise Diisocyanate aus der Reihe 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, Hexamethylendiisocyanat (HDI), 2-Methyl-pentamethylendiisocyanat, 2,2,4-Trimethylhexamethylendiisocyanat (THDI), Dodecamethylendiisocyanat, 1,4-Diisocyanato-cyclohexan, 4,4'-Diisocyanato-3,3'-dimethyldicyclohexylmethan, 4,4'-Diisocyanatodicyclohexylpropan(2,2), 3-Isocyanatomethyl-l-methyl-l-isocyanatocyclohexan (IMCI), 1,3-Diisocyanato-4-methyl-cyclohexan, 1,3-Diisocyanato-2-methylcyclohexan und α,α,α',α'-Tetramethyl-m- oder -p-xylylen-diisocyanat (TMXDI) sowie aus diesen Verbindungen bestehende Gemische. 1,3- und 1,4-Phenylendiisocyanat, 2,4- und 2,6-Toluylendiisocyanat sowie beliebige Gemische dieser Isomeren und die stellungssisomeren Diphenylmethandiisocyanate und deren Gemische sowie mehrkernige durch Phosgenierung von Anilin-Formaldehyd-Kondensaten zugängliche Polyisocyanate. Es ist möglich, beliebige Mischungen der vorgenannten Isocyanate zu verwenden.

Bevorzugt eingesetzt werden 1-Isocyanato-3,3,5-trimethyl-5-isocyanatomethylcyclohexan (IPDI), 4,4'-Diisocyanatodicyclohexylmethan, Hexamethylendiisocyanat, die isomeren Toluylendiisocyanate und Diphenylmethandiisocyanate und deren Isomerengemische. Besonders bevorzugt werden aromatische Diisocyanate eingesetzt.

Es können auch Polyisocyanate mitverwendet werden, wie sie aus Diisocyanaten der aliphatischen und aromatischen Reihe durch Biuretisierung, Allophanatisierung, Trimerisierung, Dimerisierung, aber auch durch Urethanisierung mit kurzkettigen Polyolen einer OH-Funktionalität >2 erhalten werden. Entsprechend können die Polyisocyanate e) neben den NCO-Gruppen auch Biuret, Allophanat, Iminooxadiazindion, Isocyanurat, Uretdion und Urethan-Strukturelemente aufweisen. Die Polyisocyanate sind zum großen Teil in "Lackharze, Chemie, Eigenschaften und Anwendungen", Hrsg. D. Stoye, W. Freitag, Hanser Verlag, München, Wien 1996 beschrieben. Die Polyisocyanate können auch als Gemische eingesetzt werden. Die Polyisocyanate können sowohl bei der Prepolymerisierung mitverwendet werden als auch danach zugesetzt werden. Bevorzugt werden hier Urethanpolyisocyanate der aromatischen Reihe und Mischtrimerisate auf Basis Toluylendiisocyanat/Hexamethylendiisocyanat eingesetzt; bei Produkten der aliphatischen Reihe sind Allophanate, Biurete, Trimerisate und Abmischungen von Trimerisaten mit Uretdionen auf Basis Hexamethylendiisocyanat besonders bevorzugt.

Bevorzugte NCO-reaktive Verbindungen b) sind vor allem Polyole. Als Polyole können höhermolekulare und in untergeordneter Menge auch niedermolekulare Hydroxylverbindungen eingesetzt werden.

Höhermolekulare Hydroxylverbindungen umfassen die in der Polyurethan-Chemie üblichen Hydroxypolyester, Hydroxypolylactone, Hydroxypolyether, Hydroxypolythioether, Hydroxypolyacetale, Hydroxypolycarbonate, Dimerfettalkohole und/oder Esteramide, jeweils mit mittleren Molekulargewichten von 400 bis 8 000, bevorzugt solche mit mittleren Molekulargewichten von 500 bis 6 500 g/mol.

Als niedermolekulare Polyhydroxylverbindungen können in der Polyurethan-Chemie übliche Polyole, mit Molekulargewichten von 62 bis 399 g/mol, wie Ethylenglykol, Triethylenglykol, Tetraethylenglykol, Propandiol-1,2 und -1,3, Butandiol-1,4- und -1,3, Hexandiol-1,6, Octandiol-1,8, Neopentylglykol, 1,4-Bis(hydroxymethyl)cyclohexan, Bis(hydroxymethyl)tricyclo[5.2.1.0^{2.6}]decan oder 1,4-Bis(2-hydroxyethoxy)-benzol, 2-Methyl-1,3-propandiol, 2,2,4-Trimethylpentandiol, 2-Ethyl-1,3-hexandiol, Dipropylenglykol, Polypropylenglykole, Dibutylenglykol, Polybutylenglykole, Bisphenol A, Tetrabrombisphenol A, Glycerin, Trimethylolpropan, Hexantriol-1,2,6, Butantriol-1,2,4, Pentaerythrit, Chinit, Mannit, Sorbit, Methylglykosid und 4,3,6-Dianhydrohexite verwendet werden.

Als Polyetherpolyole geeignet sind die in der Polyurethan-Chemie üblichen Polyether, wie z.B. die unter Verwendung von zwei- bis sechswertigen Startermolekülen wie Wasser oder den oben genannten Polyolen oder 1 bis 4 NH-Bindungen aufweisenden Aminen hergestellten Additions- bzw. Mischadditionsverbindungen des Tetrahydrofurans, Styroloxids, Ethylenoxids, Propylenoxids, der Butylenoxide oder des Epichlorhydrins, insbesondere des Ethylenoxids und/oder des Propylenoxids.

Als Polyesterpolyole geeignet sind z.B. Umsetzungsprodukte von mehrwertigen, vorzugsweise zweiwertigen und gegebenenfalls zusätzlich dreiwertigen Alkoholen mit mehrbasischen, vorzugsweise zweibasischen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls z.B. durch Halogenatome substituiert und/oder ungesättigt sein. Beispiele hierfür sind:

Adipinsäure, Phthalsäure, Isophthalsäure, Bernsteinsäure, Korksäure, Azelainsäure, Sebacinsäure, Trimellitsäure, Phthalsäureanhydrid, Tetrahydrophthalsäureanhydrid, Glutarsäureanhydrid, Tetrachlorphthalsäureanhydrid, Endomethylentetrahydrophthalsäureanhydrid, Maleinsäureanhydrid, Maleinsäure, Fumarsäure, dimere und trimere Fettsäuren wie Ölsäure, gegebenenfalls in Mischung mit monomeren Fettsäuren, Terephthalsäuredimethylester, Terephthalsäure-bis-glykolester.

Als mehrwertige Alkohole kommen die obengenannten Polyole in Frage.

Die in Frage kommenden Polycarbonatpolyole sind durch Reaktion von Kohlensäurederivaten, z.B. Diphenylcarbonat oder Phosgen, mit Diolen erhältlich. Als derartige Diole kommen z.B. Ethylenglykol, Triethylenglykol, Tetraethylenglykol, Propandiol-1,2 und -1,3,-Butandiol-1,4- und -1,3, Pentandiol-1,5, Hexandiol-1,6, Octandiol-1,8, Neopentylglykol, 1,4-Bis(hydroxymethyl)cyclohexan, Bis(hydroxymethyl)-tricyclo[5.2.1.0^{2.6}]decan oder 1,4-Bis(2-hydroxyethoxy)benzol, 2-Methyl-1,3-propandiol, 2,2,4-Trimethylpentandiol, Dipropylenglykol, Polypropylenglykole, Dibutylenglykol, Polybutylenglykole, Bisphenol A und Tetrabrombisphenol A oder Mischungen der genannten Diole in Frage. Vorzugweise erhält die Diolkomponente 40 bis 100 Gew.-% Hexandiol, vorzugsweise Hexandiol-1,6, und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß DE-AS 1 770 245, oder durch Veretherung von Hexandiol mit sich selbst zum di- oder Trihexylenglykol erhalten wurden. Die Herstellung solcher Derivate ist z.B. aus DE-A 1 570 540 bekannt. Auch die in der DE-A 3 717 060 beschriebenen Polyether-Polycarbonatdiole können eingesetzt werden.

Die Hydroxypolycarbonate sind vorzugsweise im wesentlichen linear. Sie können aber auch gegebenenfalls durch den Einbau polyfunktioneller Komponenten, insbesondere niedermolekularer Polyole, leicht verzweigt werden. Hierzu eignen sich beispielsweise Trimethylolpropan, Hexantriol-1,2,6, Glycerin, Butantriol-1,2,4, Pentaerythrit, Chinit, Mannit, Sorbit, Methylglykosid und 4,3,6-Dianhydrohexite.

Ganz besonders bevorzugt sind im Durchschnitt 2 bis 3 Hydroxylgruppen aufweisende Propylenoxidpolyether, die bis zu maximal 50 Gew.-% eingebaute Polyethylenoxid-Einheiten enthalten mit mittleren Molekulargewichten zwischen 200 und 9 000 g/mol, und/oder difunktionelle Tetrahydrofuran-Polyether mit mittleren Molekulargewichten zwischen 200 und 4 000 g/mol und/oder Polypropylenoxydpolyether mit einem Gesamt-Unsättigungsgrad von maximal 0,04 mÄq/g und einem mittleren, aus OH-Gehalt und Funktionalität berechneten Molekulargewicht von 2 000 bis 12 000 g/mol eingesetzt. Polyetherpolyole mit niedrigem Unsättigungsgrad sind prinzipiell bekannt und werden beispielhaft beschrieben in der EP-A 283 148, den US-A 3 278 457, 3 427 256, 3 829 505, 4 472 560, 3 278 458, 3 427 334, 3 941 849, 4 721 818, 3 278 459, 3 427 335 und 4 355 188. Schlüssel zur Herstellung derartiger Polyetherpolyole mit niedrigem Unsättigungsgrad ist die Katalyse mit Metallcyaniden.

Die Herstellung der Bindemittel-Komponente A) kann auf an sich bekannte Weise erfolgen, indem man die genannten Polyhydroxylverbindungen mit überschüssigem Diisocyanat, vorzugsweise bei ca. 40 bis 120°C umsetzt. Man wählt ein NCO/OH-Verhältnis von 1,5:1 bis 20:1, vorzugsweise 1,7:1 bis 15:1 und trennt gegebenenfalls überschüssiges Monomer vom Prepolymer durch bekannte technische Verfahren wie z.B. Dünnschichtdestillation oder Extraktion ab.

Die Bindemittel-Komponente A) enthält vorzugsweise bis zu 30 %, vorzugsweise bis zu 25 % Lösemittel und besitzt eine Viskosität vorzugsweise von 300 bis 100 000 mPas/25°C, bevorzugt 500 bis 15 000 mPas und insbesondere 500 bis 5 000 mPas/25°C.

Die Bindemittel-Komponente A) kann auch stabilisierende Substanzen enthalten. Bei den Stabilisatoren handelt es sich um die aus der Polymerchemie an sich bekannten Stabilisatoren wie sie z.B. in H. Zweifel, "Stabilization of Polymeric Materials", Springer-Verlag, Berlin 1997 beschrieben sind.

Weiterhin können die üblicherweise zur Stabilisierung NCO-funktioneller Produkte eingesetzten Zusätze wie Säurehalogenide, organische und anorganische Protonsäuren verwendet werden. Beispiele für geeignete saure Stabilisatoren sind: Benzoylchlorid; Phthaloyldichlorid; Chloressigsäure; 2-Chlorpropionsäure; teilweise verseifte Phosphorsäureester wie Phosphorsäuredibutylester; Phosphorsäurediethylester oder Phosphorsäure-bis(2-ethylhexyl)ester.

### Härter

Bevorzugte Härter enthalten Verbindungen der Formel I, worin n = 0.

Als Härter-Komponente B) werden Aminhärter enthaltend Asparaginsäureester der allgemeinen Formel I eingesetzt, worin R¹ und R² unabhängig voneinander vorzugsweise für Methyl oder Ethyl, besonders bevorzugt für Methyl stehen.

Die Herstellung der Asparaginsäureester erfolgt in an sich bekannter Weise (vergleiche EP-A 403 921) durch Umsetzung von primären Diaminen der Formel (II)

H―X―H (II)

mit

Malein- oder Fumarsäurestern der allgemeinen Formel (III)

R¹OOC-CH=CH-COOR², (III),

wobei
R¹, R² und Z die oben angegebene Bedeutung hat.

Beispiele für geeignete Diamine der Formel (II) sind 1,3-Diaminopropan, 1,4-Diaminobutan, 1,6-Diaminohexan, 2,2,4-Trimethyl-1,6-aminohexan, 2-Methyl-1,5-diaminopentan, 1,11-Diaminoundecan, 1,12-Diaminododecan, Xylylendiamin, Hexahydroxylylendiamin, Bis(aminomethyl)tricyclodecan (TCD-Amin). Die Diamine können auch als Gemische eingesetzt werden. Ebenfalls geeignet sind difunktionelle Polyetheramine mit primären Aminogruppen, wie sie beispielsweise unter der Bezeichnung Jeffamin von der Firma Texaco vertrieben werden. Bevorzugt einsetzbar sind 1,6-Diaminohexan und 2-Methyl-1,5-diaminopentan, besonders bevorzugt ist 1,6 Diaminohexan. Die Härterkomponente B) kann vorzugsweise bis zu 50 %, insbesondere bis zu 25 % Lösemittel enthalten.

In einer speziellen Ausführungsform zur Herstellung des aminischen Härters B) wird der Ester der Formel (III) mit einem Diamin II der Formel H-X-X,
in der
- X: die in Formel (I) angegebene Bedeutung hat und n = 1 ist,
im Unterschuß derart umgesetzt, dass weniger als 5 %, bezogen auf die eingesetzteReaktionskomponente III, als freier Ester im Reaktionsprodukt verbleiben.

Zur Einführung des bivalenten organischen Rests A in das Diamin II werden in dieser Ausführungsform zunächst in an sich bekannter Weise durch Umsetzung von linearen Polyetherdiolen mit Diisocyanaten NCO-Prepolymere mit einer NCO-Funktionalität von 2 und eines NCO-Gehalts von 1 bis 30 Gew.-% hergestellt. Bevorzugt sind dabei aliphatische Prepolymere mit einem NCO-Gehalt von 1 bis 10 Gew.-%; besonders bevorzugt von 2 bis 8 Gew.-%.

Aus diesen Prepolymeren werden dann in ebenfalls an sich bekannter Weise durch Umsetzung mit Diaminen der Formel (IV)

H₂N-Z-NH₂

die Diamine der Formel (II) hergestellt. Dementsprechend kann der bivalente organische Rest A neben Ether- auch Urethan- und Harnstoffstrukturelemente enthalten.

Vorzugsweise wird bei der Herstellung das Diamin der Formel (IV) in Lösung vorgelegt und das Prepolymer vorzugsweise bei 20 bis 60°C zugetropft. Es ist auch möglich durch gegebenenfalls nachträgliches Erhitzen eine Hydantoinbildung einzuleiten, wie sie z.B in der US-A 3 549 599 beschrieben ist.

Als Härter - Komponente B können auch Mischungen von Hartem der Formel (I) mit n = 0 und n = 1 eingesetzt werden. Die Herstellung solcher Mischungen ist besonders einfach dadurch möglich, dass man für die Umsetzung der Prepolymere mit den Diaminen der Formel (IV) diese Diamine in einem Überschuss einsetzt. Es resultiert dann ein Gemisch aus Diaminen der Formel (II) und (IV). Umsetzung dieses Gemisches mit den Estern der Formeln (III) führt dann direkt zu den erfindungsgemäß einzusetzenden Asparaginsäureestermischungen.

Die Härter-Komponente B kann gemäß dem Stand der Technik auch mit untergeordneten Mengen an Hilfs- und Zuschlagstoffen, sowie katalytisch aktiven Substanzen formuliert sein.

Beispiele für derartige Zusätze sind Verlaufshilfsmittel silikonischer Natur, Farbmittel, und katalytisch aktive Mengen an Wasser und/oder organischer Protonsäuren, die gegebenenfalls zur Erhöhung ihrer Aktivität in alpha-Stellung halogensubstituiert sein können. Derartige Zusätze werden in der Regel der Härter-Komponente erst kurz vor ihrer Verwendung zugegeben.

Beim erfindungsgemäßem Verfahren sind auch bei technisch normalerweise verwendeten Valverhältnissen NCO-Bindemittel/Amin-Härter nahe 1 die reaktionskinetischen Parameter mit eingeführten Systemen entweder direkt vergleichbar, oder sie sind durch Katalyse mit Wasser und/oder sauren Verbindungen sehr leicht einstellbar. Das Reaktivsystem muss so eingestellt werden, dass es unter Verarbeitungsbedingungen ausreichend lange klebrig ist, um ein Zukaschieren des Substrates innerhalb einer technisch genügend langen Zeitspanne zu ermöglichen. Andererseits muss die Beschichtung so rasch trocknen, dass man das beschichtete Substrat nach einer technisch vernünftigen Zeit vom einstweiligen Trennträger abziehen kann. Ideale Zeitspannen für das Kaschieren sind 3 bis 360 Sekunden, vorzugsweise 10 bis 180 Sekunden; für das Abziehen sind 3 bis 25 Minuten, vorzugsweise 5 bis 12 Minuten (die Obergrenze der genannten Zeitspannen bezieht sich auf das Arbeiten bei Temperaturen unter 100°C, wenn das Leder als Substrat verwendet wird) ab dem Moment des Aufsprühens bevorzugt.

Bei Verwendung des erfindungsgemäßen Verfahrens werden beschichtete flexible Substrate besonders Leder auf einfache Art und Weise im Direkt- oder Umkehrbeschichtungsverfahren erhalten. Gegenstand der Erfindung sind daher auch beschichtete flexible Substrate wie Leder und Textil dadurch gekennzeichnet, dass sie nach dem erfindungsgemäßen Verfahren hergestellt werden. Ein weiterer technischer Vorteil besteht darin, dass nach dem erfindungsgemäßen Verfahren weichere Lederbeschichtungen resultieren. Das ist erwünscht, weil dadurch ein natürlicherer Aspekt der beschichteten Leder erreicht wird.

Die folgenden Beispiele dienen zur Erläuterung der Erfindung, ohne den durch die Ansprüche definierten Erfindungsgegenstand in irgend einer Form einschränken zu wollen.

### Beispiele

### Härter 1 (erfindungsgemäß)

In einem 1 1-Vierhalskolben mit Rührer, Tropftrichter, Rückflusskühler und Innenthermometer werden 116,2 g (1 mol) 2-Methyl-1,5-diaminopentan unter Stickstoffatmosphäre vorgelegt, auf 45°C erwärmt und bei dieser Temperatur innerhalb von 1 h unter Rühren mit 344,4 g (2 mol) Maleinsäurediethylester versetzt. Anschließend lässt man 48 h bei 50°C nachrühren und gibt 115,2 g Butanon zu. Man erhält eine 80 %ige Lösung mit einem NH-Äquivalentgewicht von 288 g.

### Härter 2 (erfindungsgemäß)

In einem 1 1-Vierhalskolben mit Rührer, Tropftrichter, Rückflusskühler und Innenthermometer werden 116,2 g (1 mol) 1,6-Diaminohexan unter Stickstoffatmosphäre vorgelegt, auf 45°C erwärmt und bei dieser Temperatur innerhalb von 1 h unter Rühren mit 344,4 g (2 mol) Maleinsäurediethylester versetzt. Anschließend lässt man 48 h bei 50°C nachrühren und gibt 115,2 g Butanon zu. Man erhält eine 80 %ige Lösung mit einem NH-Äquivalentgewicht von 288 g.

### Härter 3 (nicht erfindungsgemäß) analog EP-A-403 921, Asparaginsäureester F

In einem 1 1-Vierhalskolben mit Rührer, Tropftrichter, Rückflusskühler und Innenthermometer werden 210,4 g (1 mol) Bis(4-aminocyclohexyl)methan unter Stickstoffatmosphäre vorgelegt, auf 45°C erwärmt und bei dieser Temperatur innerhalb von 1 h unter Rühren mit 344,4 g (2 mol) Maleinsäurediethylester versetzt. Anschließend lässt man 48 h bei 50°C nachrühren und gibt 138,7 g Butanon zu. Man erhält eine 80 %ige Lösung mit einem NH-Äquivalentgewicht von 347 g.

### Bindermittel 1 (erfindungsgemäß)

600 g eines Polyesters aus Adipinsäure und 1,6-Hexandiol und Neopentylglykol im molaren Verhältnis der Diole von 1,65 : 1 (OHZ: 66, Molgew.: 1700 g) werden im Vakuum bei 80 bis 90°C entwässert. Danach setzt man 129 g Toluylendiisocyanat (80 % 2,4-Isomeres) zu und lässt unter Rühren 30 Minuten bei 90°C reagieren. Nun werden (vgl. DE-A 3 011 711) 32 g eines Mischtrimerisats aus 3 Mol 2,4-Toluylendiisocyanat und 2 Mol 1,6-Hexamethylendiisocyanat zugefügt (5 Mol-%, berechnet auf gesamte Isocyanatkomponente), das Reaktionsgemisch 30 Minuten bei 90°C nachreagieren gelassen, auf 60°C abgekühlt und mit 190 g Ethylacetat auf 80 % verdünnt. NCO-Gehalt: 3,45 %; Viskosität: 2000 mPa^{·}s (22°C); Festkörper: 80 %. 1217 g des Produkts entsprechen einem Val NCO.

### Bindemittel 2 (erfindungsgemäß)

In einem Kolben mit Rührer und Rückflusskühler wird eine Mischung aus 188 g (0,2212 Val OH) entwässerter Polyester aus Adipinsäure und 1,6-Hexandiol und Neopentylglykol im molaren Verhältnis der Diole von 1,65 : 1 (OHZ: 66, Molgewicht: 1 700 g), 439 g (0,2744 Val OH)) eines TMP(Trimethylolpropan)-gestarteten PO-EO-Copolyethers mit einem EO-Anteil von 17,5 % und einem Molgewicht Mn=4800 g/mol, 200 g Ethylacetat und 0,5 g Phosphorsäuredibutylester vorgelegt. In diese Mischung werden in einem Guss 172,5 g (1,38 Val NCO)) Diphenylmethandiisocyanat Isomerengemisch (NCO-Gehalt 33,6 %) gegeben. Man erhitzt auf Rückflusstemperatur. Nach 5 h Rühren bei dieser Temperatur ist ein NCO-Gehalt von 3,7 % erreicht. Das erhaltene Produkt hat eine Viskosität von 1100 mPa^{·}s (22°C) und einen Feststoffgehalt von 80 %. 1 135 g des Produkts entsprechen einem Val NCO.

### Bindemittel 3 (erfindungsgemäß)

In einem Sulfierbecher werden 500g (4 val NCO) Diphenylmethandiisocyanat-Isomerengemisch (NCO-Gehalt 33,6 %), 2,8 g Phosphorsäuredibutylester und 0,42 g 4-Methyl-2.6-di-tert.butylphenol vorgelegt. Unter Rühren werden 922,5 g (0,5766 Val OH) eines TMP-gestarteten POEO-Copolyethers mit einem EO-Anteil von 17,5 % und einem Molgewicht Mn=4800 g/mol schnell zugetropft, wobei die Temperatur auf 60°C steigt. Nach 6 h bei dieser Temperatur ist ein NCO - Wert von 10,1 % erreicht. Ohne Kühlung werden nun 750 g (0,75 Val OH) eines Propylenglykol gestarteten PO-EO-Copolyethers mit einem EO-Anteil von 50 % schnell zugetropft, wobei die Temperatur auf 70°C steigt. Es wird bei dieser Temperatur gerührt, bis ein NCO-Wert von 5,16 % erreicht ist (3 h). Das Produkt wird auf 40°C gekühlt, und mit 544 g Ethylacetat vermischt.

Es resultiert eine klare Lösung mit einem NCO-Gehalt von 4,1 %, einer Viskosität von 750 mPa^{·}s (22°C) und einem Feststoffgehalt von 80 %. 1024 g dieser Lösung entsprechen einem val NCO.

### Herstellung der beschichteten Leder:

In ein Filmziehgerät, bestehend aus zwei polierten Walzen, die auf einen exakten Abstand eingestellt werden können, wird vor die hintere Walze ein Trennpapier eingelegt. Mit einer Fühlerblattlehre wird der Abstand zwischen Papier und vorderer Walze eingestellt. Dieser Abstand entspricht der Filmdicke (nass) der resultierenden Beschichtung.

In einem Becherglas wird das Bindemittel mit dem Härter 30 sec lang intensiv vermischt. Die Mengenverhältnisse Bindemittel/Härter errechnen sich aus dem gewähltem Valverhältnis NCO (Bindemittel) / Amin (Härter) in Kombination mit den für diese Komponenten angegebenen Äquivalenzmengen.

Die Mischung wird auf den Spalt zwischen Papier und vorderer Walze gegossen (sie tropft aus Viskositätsgründen nicht durch). Sofort wird das Papier durch den Walzenspalt senkrecht nach unten weggezogen, wobei auf dem Papier der entsprechende Film entsteht. Auf diesen Film wird im noch klebrigem Zustand das Leder (kurzfasriger Chromspalt) aufgelegt und mit einer Gummirolle von Hand mit mäßigem Druck einkaschiert.

Danach wird das Muster im Umlufttrockenschrank 5 min bei 80°C getrocknet. Man kühlt auf Raumtemperatur und zieht das Trennpapier ab. Die so erhaltenen beschichteten Spaltleder werden auf Knickechtheit (DIN 53 351 = EN 13 334) und Wasserdampfdurchlässigkeit (DIN 53 333 = DIN EN 12 991) geprüft.

Für die Herstellung der beschichteten Leder gemäß dieser Vorschrift wurden einheitlich folgende Parameter gewählt:

Valverhältnis Prepolymer / Härter = 1,08 / 1; Filmdicke (nass): 0,2 mm. Diese Parameter entsprechen nahezu den unter produktionstechnischen Bedingungen üblichen.

### Beispiele 1 bis 6 (erfindungsgemäß)

| | Beispiel 1 | Beispiel 2 | Beispiel 3 | Beispiel 4 | Beispiel 5 | Beispiel 6 | Beispiel 7 |
|---|---|---|---|---|---|---|---|
| | | | | | | | |
| Bindemittel | 1 | 2 | 3 | 1 | 2 | 3 | 1 |
| Härter | 1 | 1 | 1 | 2 | 2 | 2 | 3 |
| Lösemittelgehalt | 20 % | 20 % | 20 % | 20 % | 20 % | 20 % | 20% |
| Filmeigenschaften¹⁾ | | | | | | | |
| 0-Wert²⁾ | 1,6 | 0,9 | 0,9 | 1,7 | 1,1 | 1,0 | 0,7 |
| Zugfestigkeit [MPa] | 13 | 2,4 | 2,2 | 14,6 | 3,0 | 2,0 | 1,0 |
| Reißdehnung | 610 % | 390 % | 370 % | 650 % | 400 % | 340 % | 290 % |
| Wasserlagerung 24 h | | | | | | | |
| Zugfestigkeit [MPa] | 11,4 | 1,6 | 1,5 | 10,4 | 1,7 | 2 | 0,9 |
| Reißdehnung | 620 % | 300 % | 240 % | 610 % | 340 % | 300 % | 270 % |
| | | | | | | | |
| Ledereigenschaften | | | | | | | |
| Trockenknickungen | 60000 / x | 100000 / o | 70000 / x | 100000 / o | 90000 / x | 100000 / x | 30000 / x |
| | | | | | | | |
| Nassknickungen | 20000 / x | 20000 / o | 20000 / o | 20000 / o | 20000 / o | 20000 / o | 8000 / x |
| WDD [mg/cm2h] | 0,38 | 0,81 | 1,00 | 0,45 | 0,69 | 0,85 | 0,87 |

| | | | | | | | |
|---|---|---|---|---|---|---|---|
| Legende: Bei allen Knickungen gibt die Zahl vor dem Schrägstrich die Anzahl der Knickungen an; das Symbol nach dem Schrägstrich ist eine Bewertung der Beschädigung der Beschichtung: o = unbeschädigt; x = ganz leichte Beschädigung. Alle Knickversuche wurden beim ersten Anzeichen einer Beschädigung abgebrochen, so dass die Tabelle keine Resultate mit mittlerer Beschädigung oder völliger Zerstörung enthält. 1) Der Lösemittelgehalt in der Tabelle ist der Lösemittelgehalt des Härters | | | | | | | |
| 2) Der 0-Wert ist die Zugfestigkeit [MPa] bei 100 % Dehnung | | | | | | | |

### Beispiel 7 (nicht erfindungsgemäß)

Gemäß der obigen Vorschrift wird Härter 3 mit dem Bindemittel 1 kombiniert. Der Polymerfilm bleibt nach der Trocknung sehr klebrig, und läßt sich vom Trennpapier erst nach einer Stunde abziehen. Die Knickechtheiten sind deutlich schlechter als bei den erfindungsgemäßen Beispielen.

### Beispiel 8 (erfindungsgemäß)

Zur Überprüfung der Übertragbarkeit der Rakelversuche auf den Produktionsmaßstab wurde die Kombination aus Beispiel 6 zusätzlich gemäß Beispiel 1 in der DE-A 2 637 115 auf einer 2K-Spritzanlage mit Zwangsmischung im Sprühkopf zur Herstellung eines beschichteten Leders verwendet. Die Dosiermengen wurden so eingestellt, dass eine Valverhältnis Prepolymer zu Härter von 1,08 und eine Filmdicke (nass) von 0,27 mm resultiert. Als Leder wurde wiederum ein kurzfasriger Chromspalt verwendet.

Die Eigenschaften des erhaltenen Leders sind in der nachfolgenden Tabelle zusammengefasst. Es zeigt sich, dass die Knickechtheiten im Maschinenversuch besser sind als die im Rakelversuchen erhaltenen Werte.

| **Knickfestigkeit Flexometer** | |
|---|---|
| Trocken | 100000 / o |
| Nass | 100000 / o |
| Kälte (-25°C) | 30000 / o |
| Hydrolyse 70C/95 % r. F. 7 Tage | 30000 / o |
| Weiterreißfestigkeit (0,27 mm dick) | 7 N/cm |
| Wasserdampfdurchlässigkeit | 1,26 mg/cm²h |
| Wasserdampfaufnahme (20°C/65 % r. F.) | 12,6 mg/cm² |
| Legende: Bei allen Knickungen gibt die Zahl vor dem Schrägstrich die Anzahl der Knickungen an; das Symbol nach dem Schrägstrich ist eine Bewertung der Beschädigung der Beschichtung: o = unbeschädigt; x = ganz leichte Beschädigung. Alle Knickversuche wurden beim ersten Anzeichen einer Beschädigung abgebrochen, so dass die Tabelle keine Resultate mit mittlerer Beschädigung oder völliger Zerstörung enthält. | |

## Patentansprüche

1. Verwendung eines 2K-PU-Beschichtungssystems aus den Komponenten A) Bindemittel und B) Härter zum Beschichten von flexiblen Substraten, insbesondere Leder oder Textil, **dadurch gekennzeichnet, dass** die Härterkomponente B) einen Asparaginsäureester der Formel I enthält 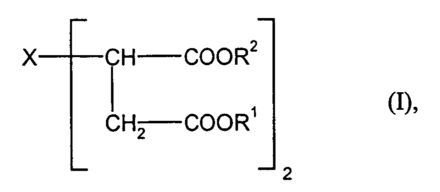 worin
R¹ und R² unabhängig voneinander gleich oder verschieden sind und für C₁-C₄-Alkyl stehen,
X für einen Rest der Formel 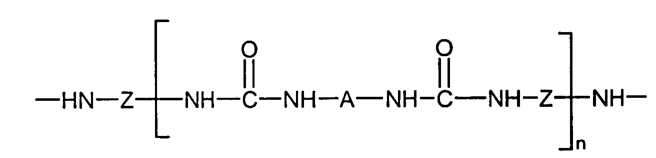 steht, worin
A ein bivalenter organischer Rest bedeutet,
Z ein bivalenter aliphatischer Rest mit 4 bis 18 C-Atomen bedeutet und
n für 0 bis 1 steht.

2. Verwendung gemäß Anspruch 1, **dadurch gekennzeichnet, dass** als Bindemittel A) eine Poly-NCO-funktionelle Verbindung mit einem NCO-Gehalt von 2 - 8 %, einem als Zahlenmittel bestimmten Molekulargewicht von 700 bis 8000 g/mol und einer NCO Funktionalität von 2,0 bis 3,0 eingesetzt wird, mit der Maßgabe, dass das Valverhältnis von Bindemittel A) zu Härter B) 1 : 1 bis 1,33 : 1 beträgt.

3. Verwendung gemäß Anspruch 1, wobei R¹ und R² für Methyl oder Ethyl stehen.

4. Verwendung gemäß Anspruch 1, wobei Z für -(CH₂)₆- oder -CH₂CH(CH₃)(CH₂)₂- steht.

5. Verwendung gemäß wenigstens einem der Ansprüche 1 bis 4, wobei als Bindemittel A) solche auf Basis aromatischer Diisocyanate eingesetzt werden.

6. Nach der Verwendung gemäß Anspruch 1 hergestelltes beschichtetes Leder.

7. Nach der Verwendung gemäß Anspruch 1 hergestelltes beschichtetes Textil.
